# EUROPÄISCHE PATENTSCHRIFT

(11) **EP 1 808 820 B1**
(45) Veröffentlichungstag und Bekanntmachung des Hinweises auf die Patenterteilung: **03.04.2013**
(21) Anmeldenummer: 06026285.4
(22) Anmeldetag: 19.12.2006
(51) Int. Cl.: G07C 9/00

(54) **Kraftfahrzeugtüranordnung**
Door arrangement for a vehicle
Agencement de porte pour un véhicule

(30) Priorität: 22.12.2005 DE 202005020140 U
(43) Veröffentlichungstag der Anmeldung: 18.07.2007
(73) Patentinhaber: Brose Schliesssysteme GmbH & Co. KG, 42369 Wuppertal (DE)
(72) Erfinder: Kachouh, Checrallah, 44227 Dortmund (DE)
(74) Vertreter: Gottschald, Jan

(56) Entgegenhaltungen:
- EP-A- 0 908 589
- EP-A1- 1 043 205
- EP-A2- 1 099 812
- DE-A1- 10 038 803
- DE-A1- 10 340 592
- DE-A1- 10 342 667
- GB-A- 2 426 102
- US-A- 4 672 375
- US-A1- 2001 054 952

## Beschreibung

Die vorliegende Erfindung betrifft eine Kraftfahrzeugtüranordnung gemäß dem Oberbegriff des Anspruchs 1.

Die Druckschrift US 2001/0054952 offenbart eine Kraftfahrzeugtüranordung gemäß dem Oberbegriff des Ansprüchs 1.

Kraftfahrzeuge sind heute zunehmend mit motorischen Komfortfunktionen ausgestattet, welche die Bedienung vereinfachen sollen. Davon ist insbesondere die Kraftfahrzeugtüranordnung betroffen. Der Begriff "Kraftfahrzeugtür" ist vorliegend umfassend zu verstehen. Damit sind die Seitentüren, die Heckklappe, die Kofferraumklappe, der Motorraumdeckel o. dgl. gemeint. Auch Schiebetüren sind von diesem Begriff umfaßt.

Bei einer bekannten Kraftfahrzeugtüranordnung (DE 103 16 306 A1) ist es vorgesehen, daß bestimmte Komfortfunktionen bei Annäherung des Benutzers automatisch ausgelöst werden. Hierfür trägt der Benutzer ein Mobilteil bei sich, das über eine Funkstrecke mit einer im Kraftfahrzeug angeordneten Steuerung kommuniziert. Solche Komfortfunktionen sind beispielsweise das motorische Entriegeln eines Kraftfahrzeugschlosses, das motorische Öffnen eines Kraftfahrzeugschlosses oder aber das motorische Öffnen bzw. Schließen einer Klappe eines Kraftfahrzeugs, das im folgenden als "Komfortbetätigung" bezeichnet wird. Eine derartige Komfortbetätigung ist auch aus der DE 10 2004 041 709 B3 bekannt.

Problematisch ist bei der Komfortbetätigung grundsätzlich die Tatsache, daß der Benutzer in bestimmten Fällen vom Auslösen einer solchen Funktion überrascht werden kann, was erhebliche Gefahren in sich birgt. Einen Ansatz zur Erhöhung der Benutzersicherheit bei der Komfortbetätigung zeigt eine weitere bekannte Kraftfahrzeugtüranordnung (DE 100 38 803 A1). Hier ist die der Kraftfahrzeugtüranordnung zugeordnete Steuerungseinrichtung mit einem Sprachmodul ausgestattet, so daß sich die Heckklappe über Spracheingabe öffnen bzw. schließen läßt, sofern der Benutzer hierzu berechtigt ist. Für die Berechtigungsabfrage trägt der Benutzer ein Mobilteil mit sich. Durch das Sprachmodul wird dem Benutzer die Kontrolle über die Komfortfunktion des motorischen Öffnens bzw. Schließens der Heckklappe, also die Komfortbetätigung, zwar zurückgegeben. Grundsätzlich besteht hier aber ein Restrisiko des ungewünschten Öffnens der Heckklappe, beispielsweise wenn sich der Benutzer unmittelbar am Kraftfahrzeug befindet und das Befehlswort zum Öffnen der Heckklappe - ggf. versehentlich - von einem Dritten gegeben wird, ohne daß der Benutzer mit einer automatischen Betätigung rechnet.

Bei den beschriebenen Kraftfahrzeugtüranordnungen ist es so, daß die Komfortbetätigung ohne die Notwendigkeit der Betätigung eines Mobilteils auslösbar ist. Für das Auslösen ist lediglich ein vorbestimmter Benutzungsvorgang erforderlich, der z. B. darin besteht, daß der Benutzer sich dem Kraftfahrzeug annähert, oder daß der Benutzer einen Sprachbefehl an ein Sprachmodul abgibt.

Die beschriebene Komfortbetätigung stellt eine erhebliche Erleichterung für den Benutzer dar. Dies gilt insbesondere dann, wenn - beispielsweise nach einem Lebensmitteleinkauf - keine Hand frei ist, um eine Fernbedienung o. dgl. zum Entriegeln des Kraftfahrzeugschlosses oder zum Öffnen der Heckklappe zu betätigen. Das gleiche gilt beispielsweise, wenn der Benutzer Kleinkinder zum Kraftfahrzeug führt und entsprechend keine Möglichkeit hat, eine Fernbedienung von Hand zu betätigen.

Problematisch ist in allen genannten Fällen allerdings die Tatsache, daß dem Benutzer durch die Komfortbetätigung zumindest zum Teil die Kontrolle über das Verhalten seines Kraftfahrzeugs entzogen wird. Dies kann zu unerwarteten und gegebenenfalls gefährlichen Situationen sowie zu einem möglichen Mißbrauch durch Dritte führen.

Bei einem bekannten Freihand-Zugangssystem für ein Kraftfahrzeug ist die zuvor angesprochene Möglichkeit des Mißbrauchs bereits erkannt worden (DE 600 04 720 T2 bzw. EP 1 043 205 B1). Durch eine manuelle Betätigung des Mobilteils, beispielsweise mit einer bestimmten Tastenfolge, lassen sich andere, verloren gegangene Mobilteile bezüglich der Steuerungseinrichtung sperren. Ihre "Anmeldung" bei der Steuerungseinrichtung wird dadurch annulliert. Nähert sich ein Benutzer dem Kraftfahrzeug mit einem derart "annullierten" Mobilteil, so hat dies keine Wirkung auf die Ausgangssignale der Steuerungseinrichtung.

Bei einer bekannten Kraftfahrzeugtüranordnung mit Komfortbedienung gemäß der Druckschrift DE 103 42 667 wird ein Befehlsspeicher des Mobilteils manuell gesetzt wenn der Benutzer die Komfortbedienung verwenden will. Daraufhin wird ein Bedienungsbefehl entweder zeitverzögert oder in einer vorgegebenen Zeitspanne mehrmals hintereinander vom Mobilteil an die Kraftfahrzeugtüranordnung übermittelt. Das Setzen des Befehlspeichers kann bereits bei sich außerhalb der Kommunikationsreichweite der Kraftfahrzeugtüranordnung befindlichem Mobilteil stattfinden.

Der Erfindung liegt das Problem zugrunde, die oben genannte, bekannte Kraftfahrzeugtüranordnung mit motorischer Öffnungs- und Schließfunktion derart auszugestalten und weiterzubilden, daß die Betriebssicherheit bei der Komfortbetätigung einer Kraftfahrzeugtür, insbesondere einer Heckklappe eines Kraftfahrzeugs, optimiert wird.

Das obige Problem wird bei einer Kraftfahrzeugtüranordnung mit den Merkmalen des Oberbegriffs von Anspruch 1 durch die Merkmale des kennzeichnenden Teils von Anspruch 1 gelöst.

Die Ansprüche 2 bis 4 betreffen bevorzugte Möglichkeiten zur Realisierung der Aktivierung der Steuerungseinrichtung.

Bei der Aktivierung der Steuerungseinrichtung wird erfindungsgemäß ein elektronischer Speicher gesetzt. Bevor die Komfortbetätigung ausgelöst wird, ist zu überprüfen, ob der Speicher gesetzt ist oder nicht. Verneinendenfalls wird das Auslösen der Komfortbetätigung gesperrt.

Ein besonders hoher Benutzungskomfort läßt sich dadurch erreichen, daß der Speicher im Mobilteil angeordnet ist. Dann ist an der Aktivierung nämlich zunächst nur das Mobilteil beteiligt. Dies hat den Vorteil, daß die Aktivierung vorgenommen werden kann, obwohl das Mobilteil außerhalb der Reichweite der drahtlosen Übertragungsstrecke zur kraftfahrzeugseitigen Steuerungseinrichtung ist. Bei der Annäherung des Benutzers, und damit des Mobilteils, an das Kraftfahrzeug wird dann der im Mobilteil angeordnete Speicher ausgelesen und die Komfortbetätigung je nach Speicherzustand freigegeben oder gesperrt. Wenn der Benutzer also beim Einkauf, beispielsweise an der Kasse stehend, bemerkt, daß er keine Hand zum Betätigen des Mobilteils freihaben wird, so kann er den Speicher noch während des Einkaufens setzen. Die Komfortbetätigung wird dann bei Annäherung an das Kraftfahrzeug ausgelöst.

Die bevorzugte Ausgestaltung gemäß Anspruch 4 ist dann vorteilhaft, wenn mehrere motorisch betätigbare Kraftfahrzeugtüren vorgesehen sind. Bei dieser Lösung ist die Aktivierung der Steuerungseinrichtung für jede Kraftfahrzeugtür separat möglich. Der Benutzer kann also auswählen, ob die Schiebetür, die Heckklappe oder eine Seitentür selbsttätig öffnen soll. Dies erhöht weiter die Handhabbarkeit der Komfortbetätigung durch den Benutzer.

Grundsätzlich ist es denkbar, daß die Deaktivierung der Steuerungseinrichtung in gleicher Weise erfolgt wie die Aktivierung. Besonders komfortabel ist es allerdings, wenn die Steuerungseinrichtung nach Ablauf einer vorbestimmten Zeit selbsttätig zurück in den deaktivierten Zustand fällt. Damit wird ausgeschlossen, daß die Steuerungseinrichtung ungewollt im aktivierten Zustand verbleibt, wenn der Benutzer vergessen hat, die Steuerungseinrichtung zu deaktivieren.

Die Ansprüche 5 bis 10 betreffen vorteilhafte Möglichkeiten für die Realisierung des Auslösens der Komfortbetätigung. Dabei betreffen die Ansprüche 6 bis 8 eine Ausgestaltung mit Annäherungssensierung. Hier ist es vorgesehen, daß eine Annäherung oder Entfernung des Mobilteils und/oder des Benutzers an das oder von dem Kraftfahrzeug das Auslösen der Komfortbetätigung bewirkt.

Bei der bevorzugten Ausgestaltung gemäß Anspruch 7 ist der im Rahmen der Komfortbetätigung zu betätigenden Kraftfahrzeugtür ein Detektionsbereich zugeordnet. Eine Bewegung des Benutzers und/oder des Mobilteils in den Detektionsbereich hinein oder aus dem Detektionsbereich heraus wird von der Annäherungssensierung detektiert, so daß die Komfortbetätigung entsprechend ausgelöst wird. Besonders vorteilhaft ist es dabei, wenn der Detektionsbereich im wesentlichen der Umgebungsbereich der jeweiligen Kraftfahrzeugtür ist. Damit wird die jeweilige Kraftfahrzeugtür gezielt nur dann betätigt, wenn sich der Benutzer in einem entsprechenden vorbestimmten Bereich befindet.

Wenn mehrere motorisch betätigbare Kraftfahrzeugtüren vorgesehen sind, ist es vorteilhaft, wenn mittels der Annäherungssensierung detektierbar ist, welcher der Kraftfahrzeugtüren sich der Benutzer nähert oder von welcher der Kraftfahrzeugtüren sich der Benutzer entfernt. Im Rahmen der Komfortbetätigung wird dann nur diejenige Kraftfahrzeugtür motorisch verstellt, die entsprechend von der jeweiligen Bewegung des Benutzers und/oder des Mobilteils betroffen ist.

Bei der bevorzugten Ausgestaltung gemäß Anspruch 9 ist zum Auslösen der Komfortbetätigung ein berührungsloser Sensor am Kraftfahrzeug vorgesehen. Dieser berührungslose Sensor ist vorzugsweise im unteren Bereich des Kraftfahrzeugs angeordnet, so daß er mit einer Fußbewegung des Benutzers betätigbar ist. Dies ist eine besonders vorteilhafte Variante, wenn ein versehentliches Öffnen bzw. Schließen der Kraftfahrzeugtür vermieden werden soll. Eine ähnliche Sicherheit kann man gemäß Anspruch 10 dadurch erzielen, daß für das Auslösen der Komfortbetätigung ein Spracherkennungsmodul vorgesehen ist.

Eine weitere Maßnahme zur Vermeidung von Fehlfunktionen zeigt die bevorzugte Ausgestaltung gemäß Anspruch 11. Hier ist eine Innenraumüberwachungseinrichtung vorgesehen, wobei ein Auslösen der Komfortbetätigung bei einem im Innenraum des Kraftfahrzeugs befindlichen Benutzer und/oder bei im Innenraum des Kraftfahrzeugs befindlichem Mobilteil nicht möglich ist.

Jede Automatikfunktion, die mit motorischen Bewegungen verbunden ist, führt zu einer potentiellen Gefährdung des Benutzers. Gemäß Anspruch 12 ist es daher vorzugsweise vorgesehen, daß der Steuerungseinrichtung eine Kollisionsvermeidungseinrichtung zugeordnet ist. Diese kann gleichzeitig im Rahmen einer Einparkhilfe genutzt werden, was zu einer besonders kompakten und kostengünstigen Ausgestaltung führt. Ferner kann die Kollisionsvermeidungseinrichtung auch im Rahmen der Auslöseeinrichtung genutzt werden, was wieder hinsichtlich der Kompaktheit und der Kosten entsprechend vorteilhaft ist.

Die Ansprüche 14 und 15 betreffen schließlich bevorzugte Ausgestaltungen, bei denen eine Passive-Entry-Funktion eines der Kraftfahrzeugtür zugeordneten Kraftfahneugschlosses vorgesehen ist. Eine solche Passive-Entry-Funktion bewirkt, daß das der jeweiligen Kraftfahrzeugtür zugeordnete Kraftfahrzeugschloß bei Annäherung des Benutzers und/oder des Mobilteils, automatisch entriegelt wird, sofern der Benutzer hierzu berechtigt ist Der Benutzer trägt hier wiederum ein Mobilteil bei sich, das die entsprechenden Berechtigungsdaten in einem Datenspeicher aufweist. Bei Annäherung des Benutzers an das Kraftfahrzeug wird zunächst ein Anlaufintervall gestartet, in dem die Steuerungseinrichtung aktiviert wird. Anschließend werden die im Datenträger des Mobilteils gespeicherten Berechtigungsdaten in einem Berechtigungs-Prüfintervall ausgelesen und geprüft. Nach erfolgreicher Durchführung des Berechtigungs-Prüfintervalls und gegebenenfalls nach einer Betätigung durch den Benutzer wird das Kraftfahrzeugschloß schließlich in einem Aktionsintervall entriegelt und gegebenenfalls geöffnet. Mit dem "Öffnen" des Kraftfahrzeugschlosses ist hier gemeint, daß die Kraftfahrzeugtür anschließend von der Schließstellung in die Öffnungsstellung überführt werden kann. Bei einem Kraftfahrzeugschloß mit Schloßfalle und Sperrklinke entspricht das Öffnen im obigen Sinne dem Ausheben der Sperrklinke.

Bei der bevorzugten Ausgestaltung ist die oben beschriebene Passive-Entry-Funktion mit der oben beschriebenen Komfortbetätigung des motorischen Öffnens bzw. Schließens der Kraftfahrzeugtür kombiniert. Dabei ist es vorgesehen, daß die für das Auslösen der Komfortbetätigung vorgesehene Auslöseeinrichtung im Rahmen der Passive-Entry-Funktion zum Auslösen des Anlaufintervalls und/oder des Aktionsintervalls dient. Dies ist insofern folgerichtig, als die Passive-Entry-Funktion dem Auslösen der Komfortbetätigung jedenfalls beim motorischen Öffnen der Kraftfahrzeugtür vorausgehen muß, um das motorische Öffnen der Kraftfahrzeugtür in mechanischer Hinsicht freizugeben. Alternativ oder zusätzlich kann die Auslöseeinrichtung wiederum im Rahmen einer Einparkhilfe genutzt werden.

Im folgenden wird die Erfindung anhand einer lediglich ein Ausführungsbeispiel darstellenden Zeichnung näher erläutert. In der Zeichnung zeigt
- Fig. 1: in einer schematischen und perspektivischen Ansicht ein Kraftfahrzeug mit einer vorschlagsgemäßen Kraftfahrzeugtüranordnung,
- Fig. 2: das Kraftfahrzeug gemäß Fig. 1 in einer Ansicht von oben und
- Fig. 3: den hinteren Abschnitt des Kraftfahrzeugs gemäß Fig. 1 in einer Seitenansicht.

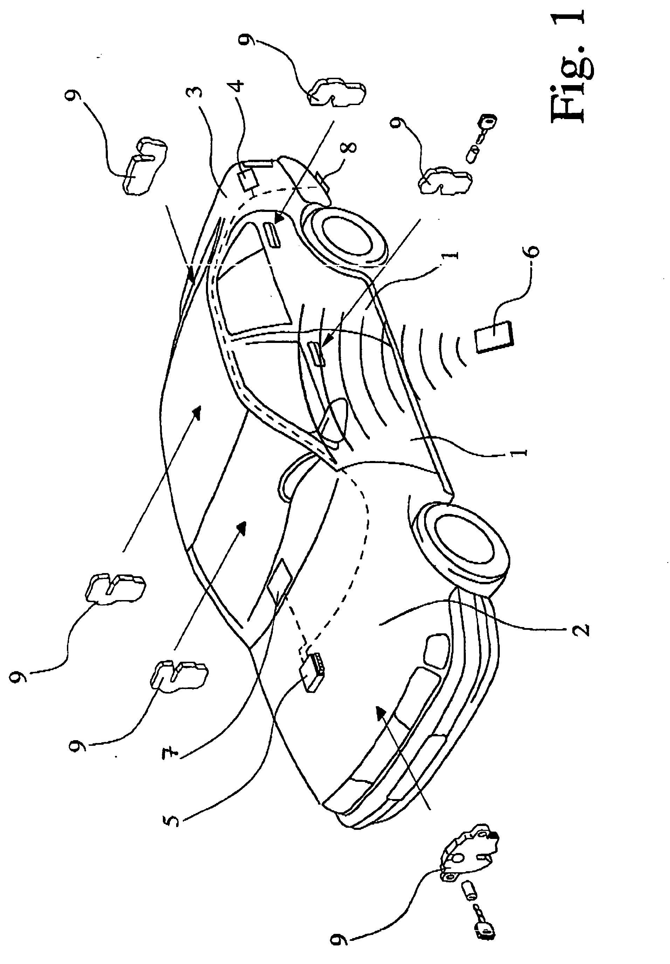

Das in Fig. 1 dargestellte Kraftfahrzeug ist mit einer vorschlagsgemäßen Kraftfahrzeugtüranordnung ausgestattet, die vier Seitentüren 1, eine Motorraumklappe 2 und eine Kofferraumklappe 3 aufweist. Je nach Ausgestaltung könnte anstelle einer schwenkbaren Seitentür auch eine Schiebetür o. dgl. vorgesehen sein. Bei den Seitentüren 1, der Motorraumklappe 2, der Kofferraumklappe 3 und der gegebenenfalls vorhandenen Schiebetür o. dgl. handelt es sich jeweils um eine Kraftfahrzeugtür im vorliegenden Sinne. Alle genannten Kraftfahrzeugtüren 1, 2, 3 lassen sich grundsätzlich mit einem Antrieb zur motorischen Verstellung ausstatten. Im folgenden wird die vorschlagsgemäße Lösung anhand der Kofferraumklappe 3 des Kraftfahrzeugs erläutert. Dies ist nicht beschränkend zu verstehen.

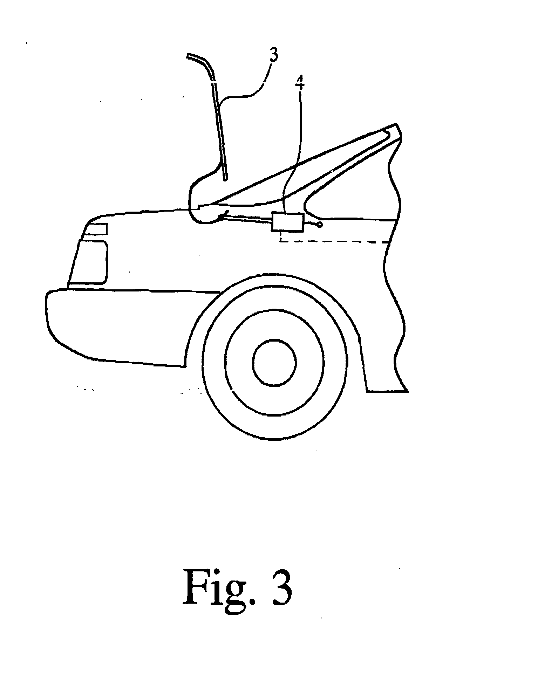

Der in Fig. 3 dargestellte Antrieb 4 dient zur motorischen Verstellung der Klappe 3 von einer Schließstellung in eine Öffnungsstellung, was im folgenden als "Öffnungsvorgang" bezeichnet wird. Ferner dient der Antrieb 4 zur motorischen Verstellung der Klappe 3 von der Öffnungsstellung in die Schließstellung, was im folgenden als "Schließvorgang" bezeichnet wird. Es ist ferner eine Steuerungseinrichtung 5 zur Ansteuerung des Antriebs 4 vorgesehen. Hier kann es sich um eine zentrale Steuerungseinrichtung 5 handeln. Es ist aber auch denkbar, daß eine dezentrale Steuerungsstruktur vorliegt, bei der jedem einzelnen ggf. vorhandenen Antrieb eine eigene Steuerungseinrichtung 5 zugeordnet ist.

Ein Mobilteil 6, das der Benutzer des Kraftfahrzeugs in der Regel bei sich trägt, wirkt bei einer Annäherung des Benutzers an das Kraftfahrzeug über eine drahtlose Übertragungsstrecke mit der Steuerungseinrichtung 5 zusammen. Bei der drahtlosen Übertragungsstrecke handelt es sich vorzugsweise um eine Funk-Übertragungsstrecke oder aber um eine Infrarot-Übertragungsstrecke. Dieses Zusammenwirken zwischen dem Mobilteil 6 und der Steuerungseinrichtung 5 umfaßt in der Regel ein Berechtigungs-Prüfintervall, um das Auslösen der Komfortbetätigung, also der selbsttätigen Durchführung eines Öffnungsvorgangs und/oder eines Schließvorgangs, freizugeben oder zu sperren.

Besonders vorteilhaft ist hier die Tatsache, daß die Komfortbetätigung durch einen vorbestimmten Benutzungsvorgang und ohne die Notwendigkeit einer - manuellen - Betätigung des Mobilteils 6 auslösbar ist. Beispielsweise kann sich die Komfortbetätigung durch ein einfaches Annähern des Benutzers an das Kraftfahrzeug auslösen lassen. Die Klappe 3 würde sich dann automatisch öffnen, wenn der Benutzer an das Kraftfahrzeug herantritt. Dies wird weiter unten noch erläutert.

Wesentlich ist nun, daß die Steuerungseinrichtung 5 hinsichtlich der Komfortbetätigung bei Bedarf in einen aktivierten Zustand und in einen deaktivierten Zustand bringbar ist und daß die Komfortbetätigung durch den oben angesprochenen, vorbestimmten Benutzungsvorgang ausschließlich bei im aktivierten Zustand befindlicher Steuerungseinrichtung 5 auslösbar ist. Solange sich die Steuerungseinrichtung 5 nicht im aktivierten Zustand befindet, ist die Komfortbetätigung der Klappe 3 nicht möglich. Damit läßt sich auf einfache Weise ausschließen, daß die Komfortbetätigung ausgelöst wird, ohne daß dies vom Benutzer erwartet wird.

Die bedarfsweise Aktivierung bzw. Deaktivierung der Steuerungseinrichtung 5 in obigem Sinne ist vorzugsweise bei abgestelltem Kraftfahrzeug, also im geparkten Zustand, vorgesehen. Es wird in der Regel so sein, daß die Durchführung der Komfortbetätigung bei laufendem Motor, ggf. bereits bei eingeschalteter Zündung, generell gesperrt ist, um ein ungewünschtes Öffnen der Kraftfahrzeugtür 1, 2, 3 während der Fahrt zu verhindern.

Um einen unberechtigten Zugriff auf die Kraftfahrzeugtüranordnung zu verhindern, ist es vorzugsweise vorgesehen, daß das Mobilteil 6 einen Datenspeicher aufweist, der Berechtigungsdaten enthält. Mittels der Steuerungseinrichtung 5 läßt sich über die drahtlose Übertragungsstrecke ein Berechtigungs-Prüfintervall durchführen, in dem die Berechtigungsdaten aus dem Mobilteil 6 ausgelesen und im Hinblick auf die Berechtigung des Benutzers geprüft werden. Die Komfortbetätigung läßt sich entsprechend ausschließlich nach erfolgreichem Berechtigungs-Prüfintervall, also bei vorliegender Berechtigung des Benutzers, auslösen.

Zur Aktivierung der Steuerungseinrichtung 5 ist vorzugsweise eine Aktivierungseinrichtung 7 vorgesehen. Gegebenenfalls kann die Aktivierungseinrichtung 7 auch zur Deaktivierung der Steuerungseinrichtung 5 genutzt werden. Dies wird weiter unten noch erläutert. Vorteilhaft ist es, wenn die Aktivierungseinrichtung eine bedarfsweise Aktivierung bzw. Deaktivierung der Steuerungseinrichtung 5 erlaubt, und zwar weitgehend unabhängig vom Steuerungszustand des Kraftfahrzeugs im übrigen.

Bei einer einfach zu realisierenden jedoch nicht beanspruchten Ausgestaltung ist es vorgesehen, daß die Aktivierungseinrichtung 7 vom Innenraum des Kraftfahrzeugs aus betätigbar ist. Dabei kann die Aktivierungseinrichtung 7 im Innenraum des Kraftfahrzeugs einen Schalter oder einen Taster aufweisen. Hier sind eine Reihe möglicher Betätigungselemente anwendbar.

Erfindungsgemäß ist die Aktivierungseinrichtung 7 durch eine Betätigung des Mobilteils 6 betätigbar. Dann ist es so, daß das Mobilteil 6 zur Betätigung der Aktivierungseinrichtung 7 über die drahtlose Übertragungsstrecke ein entsprechendes Aktivierungssignal an die Steuerungseinrichtung 5 bzw. an die Aktivierungseinrichtung 7 sendet. Dies gestaltet die Aktivierung der Steuerungseinrichtung 5 für den Benutzer besonders komfortabel.

Zur Aktivierung der Steuerungseinrichtung 5 ist ein elektronischer Speicher vorgesehen, der bei der Aktivierung der Steuerungseinrichtung 5 gesetzt wird. Ein Auslösen der Komfortbetätigung ist dann ausschließlich bei zuvor gesetztem Speicher möglich. Ansonsten ist das Auslösen der Komfortbetätigung gesperrt.

Der obige Speicher ist bei einer bevorzugten jedoch nicht beanspruchten Ausgestaltung in dem im Kraftfahrzeug befindlichen Teil der Steuerungseinrichtung 5 angeordnet. Die erfindungsgemäße Anordnung des Speichers im Mobilteil 6 bietet allerdings besondere Vorteile, wie im allgemeinen Teil der Beschreibung erläutert wurde. Der im Mobilteil 6 angeordnete Speicher kann bei einer besonders kostengünstigen Variante auch als mechanischer Speicher, beispielsweise als einfacher Schalter, ausgestaltet sein.

Sofern mehrere motorisch betätigbare Kraftfahrzeugtüren 1, 2, 3 vorgesehen sind, ist es vorteilhaft, daß die Aktivierung der Steuerungseinrichtung 5 in obigem Sinne für jede Kraftfahrzeugtür 1, 2, 3 separat erfolgen kann, so daß bei der Durchführung der Komfortbetätigung ausschließlich die Kraftfahrzeugtür 1, 2, 3 motorisch verstellt wird, für die die Steuerungseinrichtung 5 zuvor aktiviert wurde. Dies gilt insbesondere dann, wenn zwei Seitentüren, insbesondere zwei Schiebetüren auf beiden Seiten des Kraftfahrzeugs, motorisch betätigbar sind. Damit kann der Benutzer auswählen, welche der beiden Kraftfahrzeugtüren im Rahmen der Komfortbetätigung selbsttätig öffnen soll. Die Aktivierungseinrichtung 7 muß dann entsprechende Wahlmöglichkeiten bereitstellen.

Es sind verschiedene Möglichkeiten zur Deaktivierung der Steuerungseinrichtung 5 denkbar. In Erfindungsgemäßer Ausgestaltung ist es so, daß die aktivierte Steuerungseinrichtung 5 nur für eine vorbestimmte Zeit im aktivierten Zustand verbleibt und nach Ablauf der vorbestimmten Zeit zurück in den deaktivierten Zustand fällt. Grundsätzlich kann die Deaktivierung aber auch in gleicher Weise wie die Aktivierung vorgesehen sein, beispielsweise durch Umlegen eines im Innenraum des Kraftfahrzeugs befindlichen Schalters. In jedem Fall wird es vorteilhaft sein, daß die Steuerungseinrichtung 5 nach Durchführung der Komfortbetätigung in den deaktivierten Zustand überführt wird.

Sobald die Steuerungseinrichtung 5 aktiviert wurde, ist das Auslösen der Komfortbetätigung freigegeben. Für das Auslösen der Komfortbetätigung ist der Steuerungseinrichtung 5 eine am Kraftfahrzeug angeordnete Auslöseeinrichtung 8 zugeordnet. Für die Ausgestaltung der Auslöseeinrichtung 8 sind verschiedene vorteilhafte Varianten denkbar.

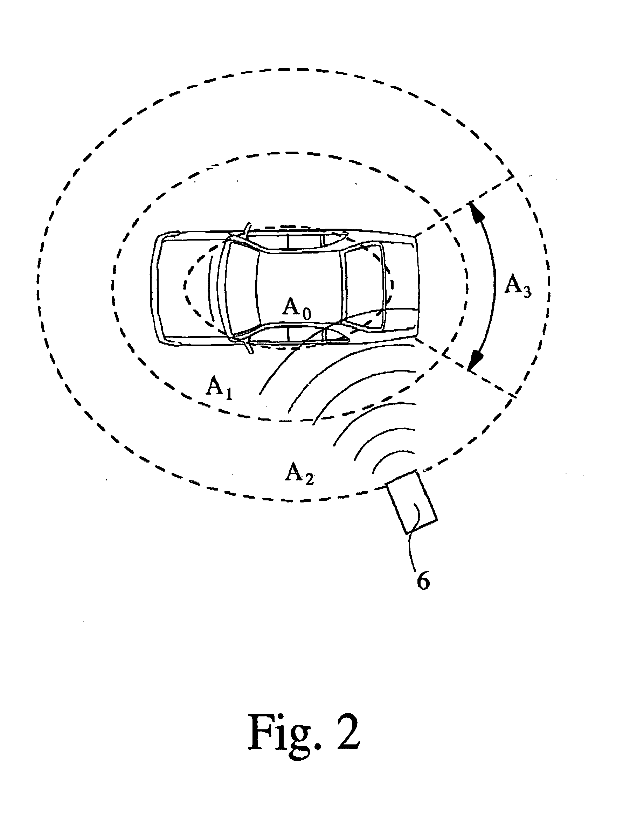

In bevorzugter Ausgestaltung weist die Auslöseeinrichtung 8 eine Annäherungssensierung auf, wobei der die Komfortbetätigung auslösende Benutzungsvorgang hier die Annäherung oder Entfernung des Mobilteils 6 - und damit des Benutzers - an das oder von dem Kraftfahrzeug ist. Es wird also die Veränderung der Position des Mobilteils 6 ermittelt, um zu entscheiden, ob die Kraftfahrzeugtür 1, 2, 3 motorisch geöffnet oder geschlossen werden soll. Dabei ist es vorteilhaft, den Umgebungsbereich des Kraftfahrzeugs in verschiedene Entfemungsbereiche A₀, A₁, A₂, A₃ einzuteilen, wie es in Fig. 2 gezeigt ist.

In einfachster Ausgestaltung ist es vorgesehen, daß über den Empfangspegel des Funksignals Aussagen über die Entfernung des Mobilteils 6 vom Kraftfahrzeug getroffen werden können. Grundsätzlich können aber auch Entfemungssensoren Anwendung finden, deren Sensorsignale eine Aussage über die Position des Benutzers zulassen. Denkbar sind hier Ultraschall-Sensoren o. dgl.

Hinsichtlich der Vermeidung eines ungewünschten Auslösens der Komfortbetätigung ist es besonders vorteilhaft, wenn der im Rahmen der Komfortbetätigung zu betätigenden Kraftfahrzeugtür 1, 2, 3 ein Detektionsbereich zugeordnet ist. Mittels der Annäherungssensierung wird dann detektiert, ob sich der Benutzer und/oder das Mobilteil 6 in dem Detektionsbereich befindet, so daß die Komfortbetätigung entsprechend ausgelöst wird. Im dargestellten und insoweit bevorzugten Ausführungsbeispiel ist ein Detektionsbereich A₃ vorgesehen, welcher der Kofferaumklappe 3 zugeordnet ist. Die Komfortbetätigung der Kofferraumklappe 3 wird nach erfolgtem Berechtigungs-Prüfintervall nur dann durchgeführt, wenn sich der Benutzer im Detektionsbereich A₃ aufhält, wenn die Wahrscheinlichkeit also hoch ist, daß die Komfortbetätigung auch gewünscht ist. Dies ist nämlich in der Regel nicht der Fall, wenn sich der Benutzer dem Kraftfahrzeug nur annähert, um in das Kraftfahrzeug einzusteigen.

Im Falle mehrerer motorisch betätigbarer Kraftfahrzeugtüren 1, 2, 3 ist es vorzugsweise vorgesehen, daß mittels der Annäherungssensierung detektierbar ist, welche der Kraftfahrzeugtüren 1, 2, 3 von der jeweiligen Bewegung des Benutzers betroffen und damit im Rahmen der Komfortbetätigung motorisch zu verstellen ist. Es ist also zunächst zu ermitteln, von welcher Richtung aus sich der Benutzer dem Kraftfahrzeug nähert. Für den Fall, daß mehrere, unterschiedlich ausgerichtete Funkantennen für die Kommunikation mit dem Mobilteil 6 vorgesehen sind, läßt sich aufgrund der jeweiligen Empfangspegel leicht ermitteln, in welchem Antennenbereich sich der Benutzer mit dem Mobilteil 6 aufhält. Insbesondere die Bewegungsrichtung läßt sich bei einem solchen System aus vorzugsweise miteinander vernetzten Funkantennen erkennen. Geht der Benutzer beispielsweise auf die Kofferraumklappe 3 des Kraftfahrzeugs zu, so wird der von der in diesem Bereich angeordneten Funkantenne detektierte Empfangspegel besonders hoch sein, so daß im Ergebnis die Kofferraumklappe 3 motorisch geöffnet wird. Hier sind entsprechend mehrere Detektionsbereiche in obigem Sinne realisiert.

Bei einer anderen bevorzugten Ausgestaltung ist es vorgesehen, daß die Auslöseeinrichtung 8 einen berührungslosen Sensor aufweist, durch den die Auslöseeinrichtung 8 betätigbar und die Komfortbetätigung auslösbar ist. In besonders bevorzugter Ausgestaltung ist der berührungslose Sensor im unteren Bereich des Kraftfahrzeugs angeordnet und mit einer Fußbewegung des Benutzers betätigbar. Dies ist in Fig. 1 dargestellt. Es kann aber auch vorgesehen sein, daß der berührungslose Sensor an einem Türgriff der betreffenden Kraftfahrzeugtür 1, 2, 3 angeordnet ist.

Bei einer weiteren bevorzugten Ausgestaltung weist die Auslöseeinrichtung 8 ein Spracherkennungsmodul auf, wobei die Komfortbetätigung durch eine Spracheingabe des außerhalb des Kraftfahrzeugs befindlichen Benutzers auslösbar ist.

Es darf darauf hingewiesen werden, daß weitere mögliche Ausgestaltungen der Auslöseeinrichtung 8 denkbar sind. Wesentlich ist in erster Linie, daß die Aktivierung, bzw. Deaktivierung der Steuerungseinrichtung 5 in oben beschriebener Weise vorgesehen ist.

Um die Wahrscheinlichkeit einer Fehlfunktion weiter zu verringern, ist bei einer weiteren bevorzugten Ausgestaltung eine Innenraumüberwachung vorgesehen, wobei die Betätigung der Auslöseeinrichtung 8 bei einem im Innenraum des Kraftfahrzeugs befindlichen Benutzer und/oder bei im Innenraum des Kraftfahrzeugs befindlichem Mobilteil 6 nicht möglich ist. Die Durchführung der Komfortbetätigung wird also genauso gesperrt wie im Falle der deaktivierten Steuerungseinrichtung 5. Die Innenraumüberwachung kann über die Auswertung der Funksignalpegel zwischen der Steuerungseinrichtung 5 und dem Mobilteil 6, oder aber durch zusätzliche Näherungssensoren o. dgl. realisiert sein.

Um das Unfallrisiko bei der selbsttätigen Verstellung der Kraftfahrzeugtür 1, 2, 3 im Rahmen der Komfortbetätigung zu reduzieren, ist der Steuerungseinrichtung 5 vorzugsweise eine Kollisionsvermeidungseinrichtung zugeordnet. Hierfür weist die Kollisionsvermeidungseinrichtung mindestens einen Sensor auf, der vorzugsweise gleichzeitig einer Einparkhilfe zugeordnet ist. Hier werden in der Regel mehrere Sensoren Anwendung finden, die unterschiedlich ausgerichtet sind. Der Sensor bzw. die Sensoren der Kollisionsvermeidungseinrichtung kann bzw. können gleichzeitig auch im Rahmen der Auslöseeinrichtung 8 genutzt werden.

Üblicherweise ist eine Kraftfahrzeugtür 1, 2, 3 mit einem Kraftfahrzeugschloß 9 ausgestattet, wobei das Kranftfahrzeugschloß 9 vorliegend vorzugsweise im Rahmen einer Passive-Entry-Funktion entriegelbar ist. Dies bedeutet, daß bei Annäherung des Mobilteils 6 an das Kraftfahrzeug ein Anlaufintervall mit einem anschließenden Berechtigungs-Prüfintervall durchgeführt wird. Nach erfolgreicher Durchführung des Berechtigungs-Prüfintervalls und gegebenenfalls nach einer Betätigung durch den Benutzer wird das Kraftfahrzeugschloß 9 dann in einem Aktionsintervall entriegelt und gegebenenfalls geöffnet. Dies wurde im allgemeinen Teil der Beschreibung erläutert.

In besonders bevorzugter Ausgestaltung wird die Passive-Entry-Funktion mit der oben beschriebenen Komfortbetätigung kombiniert. Dies bedeutet, daß die Auslöseeinrichtung 8, insbesondere die Annäherungssensierung der Auslöseeinrichtung 8, ferner im Rahmen der Passive-Entry-Funktion zum Auslösen des Anlaufintervalls und/oder des Aktionsintervalls dient. Dabei ist es vorgesehen, daß zunächst die Passive-Entry-Funktion durchlaufen wird und daß anschließend vorzugsweise das motorische Öffnen der Kraftfahrzeugtür 1, 2, 3 erfolgt. Dies ist besonders vorteilhaft, wenn mittels der Annäherungssensierung verschiedene Entfernungsbereiche detektierbar sind. Dann kann bei Annäherung des Benutzers in den Entfemungsbereich A₂ (Fig. 2) zunächst die Passive-Entry-Funktion mit Entriegelung und Öffnung des Kraftfahrzeugschlosses 9 ablaufen. Bei weiterer Annäherung in den Entfernungsbereich A₁ (Fig. 2) erfolgt dann das Auslösen der Komfortbetätigung, also das motorische Öffnen der Kraftfahrzeugtür 1, 2, 3, sofern das Berechtigungs-Prüfintervall erfolgreich durchlaufen wurde. Bei weiterer Annäherung wird schließlich die ggf. vorhandene Kollisionsvermeidungseinrichtung aktiviert, die wie oben erläutert wiederum mit der Auslöseeinrichtung 8 zusammengefaßt sein kann. Auch die Funktion einer Einparkhilfe kann im Rahmen einer solchen integrierten Anordnung realisiert sein.

Es läßt sich den obigen Ausführungen entnehmen, daß die Funktion des Auslösens der Komfortbetätigung, die Passive-Entry-Funktion, die Funktion der Kollisionsvermeidung und die Funktion der Einparkhilfe vollständig oder zumindest zum Teil zusammengefaßt werden können. Damit ist gemeint, daß bei der Realisierung dieser Funktionen auf dieselben Sensoren und/oder auf dieselben Steuerungseinrichtungen zugegriffen wird. Eine vorteilhafte Kombination ist hier insbesondere die Kombination der Funktion des Auslösens der Komfortbetätigung mit der Funktion einer Einparkhilfe.

Es wurde bereits darauf hingewiesen, daß die Kraftfahrzeugtür 1, 2, 3 als Seitentür, als Schiebetür, als Heckklappe, als Motorraumklappe o. dgl. ausgestaltet sein kann. Die vorschlagsgemäße Lösung ist grundsätzlich auf alle motorisch betätigbaren Kraftfahrzeugtüren anwendbar.

## Patentansprüche

1. Kraftfahrzeugtüranordnung mit mindestens einer Kraftfahrzeugtür (1, 2, 3) und einem Antrieb (4) zur motorischen Verstellung der Kraftfahrzeugtür (1, 2, 3) von einer Schließstellung in eine Öffnungsstellung - Öffnungsvorgang - und von der Öffnungsstellung in die Schließstellung - Schließvorgang - und mit einer Steuerungseinrichtung (5) zur Ansteuerung des Antriebs (4),
wobei der Steuerungseinrichtung (5) ein Mobilteil (6) zugeordnet ist, das der Benutzer in der Regel bei sich trägt und das bei einer Annäherung des Benutzers an das Kraftfahrzeug über eine drahtlose Übertragungsstrecke mit der Steuerungseinrichtung (5) zusammenwirkt,
wobei eine Komfortbetätigung zur selbsttätigen Durchführung eines Öffnungsvorgangs und/oder eines Schließvorgangs vorgesehen ist, die durch einen vorbestimmten Benutzungsvorgang ohne eine Betätigung des Mobilteils (6) auslösbar ist,
wobei die Steuerungseinrichtung (5) hinsichtlich der Komfortbetätigung bei Bedarf, insbesondere bei abgestelltem Kraftfahrzeug, mittels einer der Steuerungseinrichtung (5) zugeordneten Aktivierungseinrichtung (7) in einen aktivierten Zustand und ggf. auch in einen deaktivierten Zustand bringbar ist und die Komfortbetätigung durch den vorbestimmten Benutzungsvorgang ausschließlich bei im aktivierten Zustand befindlicher Steuerungseinrichtung (5) auslösbar ist, wobei die aktivierte Steuerungseinrichtung (5) nur für eine vorbestimmte Zeit im aktivierten Zustand verbleibt und nach Ablauf der vorbestimmten Zeit zurück in den desaktivierten Zustand fällt,
**dadurch gekennzeichnet,**
**dass** zur Aktivierung der Steuerungseinrichtung (5) ein elektronischer Speicher vorgesehen ist, dass bei der Aktivierung der Steuerungseinrichtung (5) der Speicher gesetzt wird, dass ein Auslösen der Komfortbetätigung ausschließlich bei zuvor gesetztem Speicher möglich ist, dass der Speicher im Mobilteil (6) angeordnet ist, so dass die Aktivierung vorgenommen werden kann, obwohl das Mobilteil (6) außerhalb der Reichweite der drahtlosen Übertragungsstrecke zur Steuerungseinrichtung (5) ist und dass bei der Annäherung des Benutzers, und damit des Mobilteils (6), an das Kraftfahrzeug der im Mobilteil (6) angeordnete Speicher ausgelesen und die Komfortbetätigung je nach Speicherzustand freigegeben oder gesperrt wird.

2. Kraftfahrzeugtüranordnung nach Anspruch 1, **dadurch gekennzeichnet, dass** das Mobilteil (6) einen Datenspeicher aufweist, der Berechtigungsdaten enthält, dass mittels der Steuerungseinrichtung (5) über die drahtlose Übertragungsstrecke ein Berechtigungs-Prüfintervall durchführbar ist und dass die Komfortbetätigung ausschließlich nach erfolgreichem Berechtigungs-Prüfintervall auslösbar ist.

3. Kraftfahrzeugtüranordnung nach Anspruch 1 oder 2, **dadurch gekennzeichnet, dass** die Aktivierungseinhchtung (7) durch eine Betätigung des Mobilteils (6) betätigbar ist.

4. Kraftfahrzeugtüranordnung nach einem der vorhergehenden Ansprüche, **dadurch gekennzeichnet, dass** mehrere motorisch betätigbare Kraftfahrzeugtüren (1, 2, 3) vorgesehen sind und dass die Aktivierung der Steuerungseinrichtung (5) für jede Kraftfahrzeugtür (1, 2, 3) separat erfolgen kann, so dass bei der Durchführung der Komfortbetätigung ausschließlich die Kraftfahrzeugtür (1, 2, 3) motorisch verstellt wird, für die die Steuerungseinrichtung (5) zuvor aktiviert wurde.

5. Kraftfabrzeugtüranordnung nach einem der vorhergehenden Ansprüche, **dadurch gekennzeichnet, dass** der Steuerungseinrichtung (5) eine am Kraftfahrzeug angeordnete Auslöseeinrichtung (8) zum Auslösen der Komfortbetätigung zugeordnet ist.

6. Kraftfahrzeugtüranordnung nach Anspruch 5, **dadurch gekennzeichnet, dass** die Auslöseeinrichtung (8) eine Annäherungssensierung aufweist und dass der die Komfortbetätigung auslösende Benutzungsvorgang die Annäherung oder Entfernung des Mobilteils (6) und/oder des Benutzers an das oder von dem Kraftfahrzeug ist.

7. Krartfahrzeugtüranordnung nach Anspruch 6, **dadurch gekennzeichnet, dass** mittels der Annäherungssensierung detektierbar ist, ob sich der Benutzer und/oder das Mobilteil (6) in einen der im Rahmen der Komfortbetätigung zu beitätigenden Kraftfahrzeugtür (1, 2, 3) zugeordneten Detektionsbereich hinein bewegt oder aus einem der im Rahmen der Komfortbetätigung zu betätigenden Kraftfahrzeugtür (1, 2, 3) zugeordneten Detektionsbereich heraus bewegt.

8. Kraftfahrzeugtüranordnung nach Anspruch 6, **dadurch gekennzeichnet, dass** mehrere motorisch betätigbare Kraftfahrzeugtüren (1, 2, 3) vorgesehen sind und dass mittels der Annäherungssensierung detektierbar ist, welche der Kraftfahrzeugtüren (1, 2, 3) von der jeweiligen Bewegung des Benutzers und/oder des Mobilteils (6) betroffen und damit im Rahmen der Komfortbetätigung motorisch zu verstellen ist.

9. Kraftfahrzeugtüranordnung nach einem der Ansprüche 5 bis 8, **dadurch gekennzeichnet, dass** die Auslöseeinrichtung (8) einen berührungslosen Sensor aufweist, der im unteren Bereich des Kraftfahrzeugs angeordnet und mit einer Fußbewegung des Benutzers betätigbar ist.

10. Kraftfahrzeugtüranordnung nach Anspruch 5, **dadurch gekennzeichnet, dass** die Auslöseeinrichtung (8) ein Spracherkennungsmodul aufweist und dass die Komfortbetätigung durch eine Spracheingabe des außerhalb des Kraftfahrzeugs befindlichen Benutzers auslösbar ist.

11. Kraftfahrzeugtüranordnung nach einem der Ansprüche 5 bis 10, **dadurch gekennzeichnet, dass** eine Innenraumüberwachungseinrichtung vorgesehen ist und dass die Betätigung der Auslöseeinrichtung (8) bei einem im Innenraum des Kraftfahrzeugs befindlichen Benutzer und/oder bei einem im Innenraum des Kraftfahrzeugs befindlichem Mobilteil (6) nicht möglich ist.

12. Kraftfahrzeugtüranordnung nach einem der vorhergehenden Ansprüche, **dadurch gekennzeichnet, dass** der Steuerungseinrichtung (5) eine Kollisionsvermeidungseinrichtung zur Vermeidung von Kollisionen während des Öffnungsvorgangs und ggf. während des Schließvorgangs zugeordnet ist und dass die Kollisionsvermeidungseinrichtung hierfür mindestens einen Sensor aufweist.

13. Kraftfahrzeugtüranordnung nach Anspruch 12, **dadurch gekennzeichnet, dass** der Sensor bzw. die Sensoren gleichzeitig einer Einparkhilfe zugeordnet sind und/oder dass der Sensor bzw. die Sensoren gleichzeitig der Auslöseeinrichtung (8) zugeordnet sind.

14. Kraftfahrzeugtüranordnung nach einem der vorbergehenden Ansprüche, **dadurch gekennzeichnet, dass** der Kraftfahrzeugtür (1, 2, 3) ein Kraftfahrzeugschloß (9) zugeordnet ist und dass das Kraftfahrzeugschloß (9) im Rahmen einer Passive-Entry-Funktion entriegelbar ist.

15. Kraftfahrzeugtüranordnung nach Anspruch 14, **dadurch gekennzeichnet, dass** bei Annäherung des Mobilteils (6) und/oder des Benutzers an das Kraftfahrzeug ein Anlaufintervall mit einem anschließenden Berechtigungs-Prüfintervall durchgeführt wird und dass nach erfolgreicher Durchführung des Berechtigungs-Prüfintervalls und ggf. nach einer Betätigung durch den Benutzer das Kraftfahrzeugschloß (9) in einem Aktionsintervall entriegelt und ggf. geöffnet wird.

## Claims

1. Motor vehicle door arrangement having at least one motor vehicle door (1, 2, 3) and a drive (4) for motor-driven adjustment of the motor vehicle door (1, 2, 3) from a closed position into an open position - opening process - and from the open position into the closed position - closing process - and having a control device (5) for actuating the drive (4),
wherein a mobile part (6), which the user usually carries on his person and which interacts with the control device (5) via a wireless transmission link when the user approaches the motor vehicle, is assigned to the control device (5),
wherein a comfort activation for automatically carrying out an opening process and/or a closing process is provided, which activation can be triggered by a predetermined use process without activation of the mobile part (6),
wherein, with respect to the comfort activation, the control device (5) can, when necessary, in particular when the motor vehicle is parked, be placed in an activated state and, if appropriate, also in a deactivated state, by means of an activation device (7) which is assigned to the control device (5), and the comfort activation can be triggered by the predetermined use process exclusively when the control device (5) is in the activated state, wherein the activated control device (5) remains in the activated state only for a predetermined time and drops back into the deactivated state after the expiry of the predetermined time,
**characterized**
**in that** in order to activate the control device (5) an electronic memory is provided, in that, when the control device (5) is activated, the memory is set, in that triggering the comfort activation is possible exclusively when the memory has previously been set, in that the memory is arranged in the mobile part (6) with the result that the activation can be performed even though the mobile part (6) is outside the range of the wireless transmission link to the control device (5), and in that, when the user, and therefore the mobile part (6), approaches the motor vehicle, the memory which is arranged in the mobile part (6) is read out and the comfort activation is enabled or disabled depending on the state of the memory.

2. Motor vehicle door arrangement according to Claim 1, **characterized in that** the mobile part (6) has a data memory which contains authorization data, **in that** an authorization test interval can be implemented by means of the control device (5) via the wireless transmission link, and **in that** the comfort activation can be triggered exclusively after a successful authorization test interval.

3. Motor vehicle door arrangement according to Claim 1 or 2, **characterized in that** the activation device (7) can be activated by activating the mobile part (6).

4. Motor vehicle door arrangement according to one of the preceding claims, **characterized in that** a plurality of motor vehicle doors (1, 2, 3) which can be activated by motor are provided, and **in that** the activation of the control device (5) can take place separately for each motor vehicle door (1, 2, 3), with the result that, when the comfort activation is implemented, exclusively the motor vehicle door (1, 2, 3) for which the control device (5) was previously activated is adjusted by the motor.

5. Motor vehicle door arrangement according to one of the preceding claims, **characterized in that** a triggering device (8) which is arranged on the motor vehicle for the purpose of triggering the comfort activation is assigned to the control device (5).

6. Motor vehicle door arrangement according to Claim 5, **characterized in that** the triggering device (8) has a proximity-sensing system, and **in that** the use process which triggers the comfort activation is the approach or distancing of the mobile part (6) and/or of the user to or from the motor vehicle.

7. Motor vehicle door arrangement according to Claim 6, **characterized in that** by means of the approach-sensing system it is possible to detect whether the user and/or the mobile part (6) is moving into a detection range assigned to the motor vehicle door (1, 2, 3) to be activated within the scope of the comfort activation or is moving out of a detection range assigned to the motor vehicle door (1, 2, 3) to be activated within the scope of the comfort activation.

8. Motor vehicle door arrangement according to Claim 6, **characterized in that** a plurality of motor vehicle doors (1, 2, 3) which can activated by motor are provided, and **in that** by means of the approach-sensing system it is possible to detect which of the motor vehicle doors (1, 2, 3) is affected by the respective movement of the user and/or of the mobile part (6) and should therefore be adjusted by a motor within the scope of the comfort activation.

9. Motor vehicle door arrangement according to one of Claims 5 to 8, **characterized in that** the triggering device (8) has a contactless sensor which is arranged in the lower region of the motor vehicle and can be activated with a foot movement of the user.

10. Motor vehicle door arrangement according to Claim 5, **characterized in that** the triggering device (8) has a voice recognition module, and **in that** the comfort activation can be triggered by a voice input of the user who is located outside the motor vehicle.

11. Motor vehicle door arrangement according to one of Claims 5 to 10, **characterized in that** a passenger compartment monitoring device is provided, and **in that** the activation of the triggering device (8) is not possible when a user is located in the passenger compartment of the motor vehicle and/or when a mobile part (5) is located in the passenger compartment of the motor vehicle.

12. Motor vehicle door arrangement according to one of the preceding claims, **characterized in that** a collision avoidance device for avoiding collisions during the opening process and, if appropriate, during the closing process, is assigned to the control device (5), and **in that** the collision avoidance device has at least one sensor for this purpose.

13. Motor vehicle door arrangement according to Claim 12, **characterized in that** the sensor or sensors is/are simultaneously assigned to a parking aid, and/or **in that** the sensor or sensors is/are simultaneously assigned to the triggering device (8).

14. Motor vehicle door arrangement according to one of the preceding claims, **characterized in that** a motor vehicle lock (9) is assigned to the motor vehicle door (1, 2, 3), and **in that** the motor vehicle lock (9) can be released within the scope of a passive entry function.

15. Motor vehicle door arrangement according to Claim 14, **characterized in that** when the mobile part (6) and/or the user approaches the motor vehicle, a starting interval having a subsequent authorization test interval is implemented, and **in that** after successful implementation of the authorization test interval, and, if appropriate, after activation by the user, the motor vehicle lock (9) is released and, if appropriate, opened in an action interval.

## Revendications

1. Agencement de porte de véhicule automobile avec au moins une porte de véhicule automobile (1, 2, 3) et un entraînement (4) servant au déplacement motorisé de la porte de véhicule automobile (1, 2, 3) d'une position fermée dans une position ouverte - processus d'ouverture - et de la position ouverte dans la position fermée - processus de fermeture - et avec un dispositif de commande (5) servant à commander l'entraînement (4) ;
une partie mobile (6) étant associée au dispositif de commande (5), ladite partie étant en général portée par l'utilisateur et interagissant avec le dispositif de commande (5) lorsque l'utilisateur approche du véhicule automobile par le biais d'une transmission sans fil ; un actionnement de confort étant prévu, celui-ci permettant une exécution automatique d'un processus d'ouverture et/ou d'un processus de fermeture et pouvant être déclenché par un processus d'utilisation prédéfini sans actionnement de la partie mobile (6) ;
le dispositif de commande (5) pouvant être amené dans un état activé et le cas échéant également dans un état désactivé par rapport à l'actionnement de confort, si nécessaire, notamment en cas de véhicule garé, à l'aide d'un dispositif d'activation (7) associé au dispositif de commande (5) et l'actionnement de confort pouvant être déclenché par le processus d'utilisation prédéfini exclusivement lorsque le dispositif de commande (5) se trouve dans l'état activé;
le dispositif de commande (5) activé ne restant dans l'état activé que pendant une durée prédéfinie et revenant à l'état désactivé après écoulement d'une durée prédéfinie ;
**caractérisé en ce que** :
une mémoire électronique est prévue pour l'activation du dispositif de commande (5), que la mémoire est misse en place lors de l'activation du dispositif de commande (5), qu'un déclenchement de l'actionnement de confort est exclusivement possible lorsque la mémoire a auparavant été mise en place, que la mémoire est disposée dans la partie mobile (6), de sorte que l'activation peut être réalisée même si la partie mobile (6) se situe hors de portée de la transmission sans fil par rapport au dispositif de commande (5) et que lorsque l'utilisateur approche, et ainsi la partie mobile (6), du véhicule automobile, la mémoire disposée dans la partie mobile (6) est lue et l'actionnement de confort est déclenché ou bloqué en fonction de l'état de la mémoire.

2. Agencement de porte de véhicule automobile selon la revendication 1, **caractérisé en ce que** la partie mobile (6) comporte une mémoire de données contenant les données d'autorisation, qu'un intervalle de contrôle d'autorisation peut être effectué par le dispositif de commande (5) par le biais de la transmission sans fil et que l'actionnement de commande peut être déclenché exclusivement après validation de l'intervalle de contrôle d'autorisation.

3. Agencement de porte de véhicule automobile selon la revendication 1 ou 2, **caractérisé en ce que** le dispositif d'activation (7) peut être actionné par le biais d'un actionnement de la partie mobile (6).

4. Agencement de porte de véhicule automobile selon l'une quelconque des revendications précédentes, **caractérisé en ce que** plusieurs portes de véhicule automobile (1, 2, 3) actionnables de façon motorisée sont prévues et que l'activation du dispositif de commande (5) peut se produire séparément pour chaque porte de véhicule automobile (1, 2, 3), de sorte que lors de l'utilisation de l'actionnement de confort, seule la porte de véhicule automobile (1, 2, 3) pour laquelle le dispositif de commande (5) a précédemment été activé est déplacée de façon motorisée.

5. Agencement de porte de véhicule automobile selon l'une quelconque des revendications précédentes, **caractérisé en ce qu'**un dispositif de déclenchement (8) disposé au niveau du véhicule automobile est associé au dispositif de commande (5) pour déclencher l'actionnement de confort.

6. Agencement de porte de véhicule automobile selon la revendication 5, **caractérisé en ce que** le dispositif de déclenchement (8) comporte une détection d'approche et que le processus d'utilisation déclenchant l'actionnement de confort est l'approche ou l'éloignement de la partie mobile (6) et/ou de l'utilisateur par rapport au véhicule automobile.

7. Agencement de porte de véhicule automobile selon la revendication 6, **caractérisé en ce que** la détection d'approche permet de détecter si l'utilisateur et/ou la partie mobile (6) rentrent dans une zone de détection associée à la porte de véhicule automobile (1, 2, 3) devant être actionnée dans le cadre de l'actionnement de confort ou s'ils sortent d'une zone de détection associée à la porte de véhicule automobile (1, 2, 3) devant être actionnée dans le cadre de l'actionnement de confort.

8. Agencement de porte de véhicule automobile selon la revendication 6, **caractérisé en ce que** plusieurs portes de véhicule automobile (1, 2, 3) actionnables de façon motorisée sont prévues et que la détection d'approche permet de détecter laquelle des portes de véhicule automobile (1, 2, 3) est concernée par le mouvement respectif de l'utilisateur et/ou de la partie mobile (6) et ainsi déplacée de façon motorisée dans le cadre de l'actionnement de confort.

9. Agencement de porte de véhicule automobile selon l'une quelconque des revendications 5 à 8, **caractérisé en ce que** le dispositif de déclenchement (8) comporte un capteur sans contact pouvant être disposé dans la zone inférieure du véhicule automobile et être actionné par le biais d'un mouvement de pied de l'utilisateur.

10. Agencement de porte de véhicule automobile selon la revendication 5, **caractérisé en ce que** le dispositif de déclenchement (8) comporte un module de reconnaissance vocale et que l'actionnement de confort peut être déclenché par une instruction prononcée à voix haute par l'utilisateur se trouvant à l'extérieur du véhicule automobile.

11. Agencement de porte de véhicule automobile selon l'une quelconque des revendications 5 à 10, **caractérisé en ce qu'**un dispositif de surveillance d'habitacle est prévu et que l'actionnement du dispositif de déclenchement (8) n'est pas possible lorsqu'un utilisateur se trouve dans l'habitacle du véhicule automobile et/ou lorsqu'une partie mobile (6) se trouve dans l'habitacle du véhicule automobile.

12. Agencement de porte de véhicule automobile selon l'une quelconque des revendications précédentes, **caractérisé en ce qu'**un dispositif anticollision est associé au dispositif de commande (5) pour éviter les collisions pendant le processus d'ouverture et le cas échéant pendant le processus de fermeture et que le dispositif anticollision comporte au moins un capteur.

13. Agencement de porte de véhicule automobile selon la revendication 12, **caractérisé en ce que** le capteur et/ou les capteurs sont en même temps associés à un dispositif d'aide au stationnement et/ou que le capteur et/ou les capteurs sont en même temps associés au dispositif de déclenchement (8).

14. Agencement de porte de véhicule automobile selon l'une quelconque des revendications précédentes, **caractérisé en ce qu'**une serrure de véhicule automobile (9) est associée à la porte de véhicule automobile (1, 2, 3) et que la serrure de véhicule automobile (9) peut être déverrouillée dans le cadre d'une fonction d'entrée passive.

15. Agencement de porte de véhicule automobile selon la revendication 14, **caractérisé en ce que** lors de l'approche de la partie mobile (6) et/ou de l'utilisateur au niveau du véhicule automobile, un intervalle de démarrage est mis en oeuvre avec un intervalle de contrôle d'autorisation et qu'une fois l'intervalle de contrôle d'autorisation réussi et le cas échéant après un actionnement par l'utilisateur, la serrure du véhicule automobile (9) est déverrouillée et le cas échéant ouverte au cours d'un intervalle d'action.
